# EUROPÄISCHE PATENTSCHRIFT

(11) **EP 4 351 943 B1**
(45) Veröffentlichungstag und Bekanntmachung des Hinweises auf die Patenterteilung: **16.07.2025**
(21) Anmeldenummer: 22730498.7
(22) Anmeldetag: 25.05.2022
(51) Int. Cl.: B60W 30/06, B62D 15/02

(54) **TRANSPORTABLES PARKASSISTENZSYSTEM, VERFAHREN UND COMPUTERPROGRAMMPRODUKT**
PORTABLE PARKING ASSISTANCE SYSTEM, METHOD AND COMPUTER PROGRAM PRODUCT
SYSTÈME D'AIDE AU STATIONNEMENT PORTABLE, PROCÉDÉ ET PRODUIT DE PROGRAMME D'ORDINATEUR

(30) Priorität: 08.06.2021 DE 102021114629
(43) Veröffentlichungstag der Anmeldung: 17.04.2024
(73) Patentinhaber: Valeo Schalter und Sensoren GmbH, 74321 Bietigheim-Bissingen (DE)
(72) Erfinder: JECKER, Nicolas, 74321 Bietigheim-Bissingen (DE); SCHNEPEL, Lasse, 74321 Bietigheim-Bissingen (DE); FUCHS, Fabian, 74321 Bietigheim-Bissingen (DE); JOOS, Malte, 74321 Bietigheim-Bissingen (DE); MOSNIER-THOUMAS, Ludovic, 74321 Bietigheim-Bissingen (DE); AYYAPPAN, Thirumalai Kumarasamy, 74321 Bietigheim-Bissingen (DE)
(74) Vertreter: Jauregui Urbahn, Kristian
(86) Internationale Anmeldenummer: PCT/EP2022/064279
(87) Internationale Veröffentlichungsnummer: WO 2022/258387

(56) Entgegenhaltungen:
- CN-A- 111 439 255
- US-A1- 2020 209 877
- US-B1- 9 581 997

## Beschreibung

Die vorliegende Erfindung betrifft ein transportables Parkassistenzsystem, ein Verfahren und ein Computerprogrammprodukt.

Es sind Fahrzeuge bekannt, die eine automatisierte Parkfunktion aufweisen, die insbesondere zum automatischen Parken des Fahrzeugs in einem geeigneten Parkhaus oder einem geeigneten Parkplatz geeignet sind. Derartige Systeme werden beispielsweise als automatisierte Valet-Parksysteme bezeichnet. Hierbei wird zwischen zwei Typen unterschieden. Bei einem ersten Typ steuert sich das Fahrzeug selbst, wobei das Parkhaus beispielsweise über geeignete Merkmale verfügt, die zur Orientierung des Fahrzeugs dienen, wie beispielsweise ARUCO-Codes. Bei einem zweiten Typ ist das Fahrzeug fernsteuerbar, wobei das Parkhaus beispielsweise über Sensorik und Pfadplanungsmittel verfügt, um das Fahrzeug zu steuern. Zwischen diesen beiden Typen kann es verschiedene Zwischenstufen geben, bei denen sich die Funktionen unterschiedlich auf Fahrzeug und Parkhaus verteilen.

Bei Typ-2 Valet-Parksystemen befindet sich die Sensorik und Logik insbesondere in der Infrastruktur, wie einem Parkhaus, und ist damit ortsfest. Um ein solches System an einem bestimmten Ort bereitzustellen, ist bislang eine sehr aufwändige Installation und Inbetriebnahme notwendig. Dies lohnt sich aus wirtschaftlicher Sicht nur dann, wenn langfristig eine Nachfrage nach dem System besteht. Daher sind die bekannten Systeme nicht geeignet, um für eine temporär hohe Nachfrage, wie bei einer Großveranstaltung, eingesetzt zu werden. Zudem benötigen herkömmliche Systeme eine vorhandene Infrastruktur, in die sie integriert werden können. Dieses sind daher ebenfalls nicht geeignet, um an Orten ohne eine solche Infrastruktur eingesetzt zu werden.

CN 111 439 255 A bezieht sich auf eine Dachbox, Steuerbox und Steuergerät in Zusammenwirkung, um autonomes Parken zu erreichen.

US 9 581 997 B1 offenbart ein Verfahren und System zur Cloud-basierten Kommunikation zur automatisierten fahrerlosen Bewegung.

US 2020/209877 A1 betrifft eine Verfahren zum automatisierten Valet Parken. Das Verfahren beinhaltet Initiieren eines automatisierten Valet Parkens, Übermitteln einer Zielposition und einer Führroute von einer Infrastruktureinrichtung zu einem Fahrzeug, Ausführen eines autonomen Fahrens zu der Zielposition entlang der Führroute, Messen einer Fahrzeugposition, Berechnen der Genauigkeit der gemessenen Fahrzeugposition, Ausführen eines autonomen Pakens an der Zielposition.

Vor diesem Hintergrund besteht eine Aufgabe der vorliegenden Erfindung darin, ein Parkassistenzsystem anzugeben, das die vorstehend genannten Nachteile herkömmlicher Parkassistenzsysteme überwindet.

Gemäß einem ersten Aspekt wird ein transportables Parkassistenzsystem vorgeschlagen, welches zum Aufbau und Abbau an einer Mehrzahl unterschiedlicher Orte geeignet ist und welches im aufgebauten Zustand an einem bestimmten Ort zum Steuern einer Anzahl von Fahrzeugen innerhalb eines vorbestimmten Bereichs des bestimmten Orts eingerichtet ist. Das transportable Parkassistenzsystem umfasst eine Anzahl von in dem vorbestimmten Bereich anordenbaren Sensoren, wobei jeder der Sensoren zum Erfassen von in einem jeweiligen bestimmten Erfassungsbereich des vorbestimmten Bereichs befindlichen Fahrzeugen und zum drahtlosen Übertragen eines entsprechenden Sensorsignals eingerichtet ist, und es umfasst eine Steuereinrichtung, die dazu eingerichtet ist, die Sensorsignale von den Sensoren zu empfangen, eine jeweilige Position der Fahrzeuge in Abhängigkeit der empfangenen Sensorsignale zu ermitteln und jedes der Fahrzeuge in Abhängigkeit von den ermittelten Positionen der Fahrzeuge und von einer bestimmten digitalen Karte des vorbestimmten Bereichs zu steuern.

Dieses Parkassistenzsystem weist den Vorteil auf, dass es flexibel an unterschiedlichen Orten einsetzbar ist. Das Parkassistenzsystem kann somit für einzelne Veranstaltungen, wie Messen, Konzerte, Sportereignisse und dergleichen, bereitgestellt werden. Ferner kann das Parkassistenzsystem an Orten, die keine Infrastruktur aufweisen, in die das Parkassistenzsystem integriert werden könnte, bereitgestellt werden. Dies sind beispielsweise Freiparkplätze, Firmen- oder Betriebsgelände, zeitlich befristet genutzte Lager- und/oder Abstellflächen außerhalb von Gebäuden und dergleichen. Aufgrund der drahtlosen Übertragung der Sensorsignale ist eine aufwändige Verkabelung der Sensoren mit der Steuereinrichtung nicht nötig, was das Parkassistenzsystem sehr flexibel macht. Insbesondere ist das Parkassistenzsystem auch flexibel um zusätzliche Sensoren erweiterbar, beispielsweise um den vorbestimmten Bereich nachträglich zu vergrößern oder anderweitig anzupassen, und/oder um eine exaktere Erfassung der Fahrzeuge in als problematisch ermittelten Bereichen zu ermöglichen.

Das transportable Parkassistenzsystem bildet im aufgebauten Zustand insbesondere ein Typ-2 Valet-Parkassistenzsystem aus. Es unterscheidet sich von herkömmlichen Typ-2 Valet-Parkassistenzsystemen insbesondere dadurch, dass es zum Aufbauen und Abbauen an unterschiedlichen Orten vorgesehen ist, anstelle fest an einem bestimmten Ort installiert zu werden. Im abgebauten Zustand ist das Parkassistenzsystem insbesondere in eine Anzahl von Einzelteilen oder Komponenten zerlegt. Im abgebauten Zustand kann das Parkassistenzsystem insbesondere mit herkömmlichen Mitteln, wie einem LKW, Zug, Schiff und/oder Flugzeug, zu dem jeweils gewünschten Ort transportiert werden.

Der vorbestimmte Bereich wird beispielswiese durch den Anbieter oder Betreiber des Parkassistenzsystems definiert. Dies erfolgt beispielsweise in einer Planungsphase, die dem Aufbau des Parkassistenzsystems vorangeht. In der Planungsphase wird einerseits der vorbestimmte Bereich bestimmt, es wird aber auch eine ungefähre Anordnung der Sensoren in dem vorbestimmten Bereich, deren jeweilige erwünschte Erfassungsbereiche sowie eine angestrebte Unterteilung des vorbestimmten Bereichs in Fahrkorridore und Parkflächen bestimmt. Die vorstehenden, in der Planungsphase bestimmten Merkmale sind jedoch insbesondere nicht zwingend exakt, sondern dienen lediglich dazu, den Aufbau des Parkassistenzsystems zu ermöglichen. Während und/oder nach dem Aufbau des Parkassistenzsystems können einzelne oder alle der genannten Merkmale an die tatsächlichen Gegebenheiten angepasst werden.

Die Kernelemente des transportablen Parkassistenzsystems bildet die Anzahl von Sensoren und die Steuereinrichtung. Die Anzahl von Sensoren umfasst eine Menge N größer oder gleich eins Sensoren (N ≥ 1). Verschiedene Sensoren der Anzahl können unterschiedliche Sensortypen ausbilden. Jeder der Sensoren ist im aufgebauten Zustand des Parkassistenzsystems zum Erfassen eines bestimmten Erfassungsbereichs des vorbestimmten Bereichs eingerichtet. Der bestimmte Erfassungsbereich hängt einerseits von der Anordnung und dem Sichtfeld eines jeweiligen Sensors ab, andererseits kann der bestimmte Erfassungsbereich für einen jeweiligen Sensor auch gezielt begrenzt werden, beispielsweise können Teile eines Erfassungsbereichs, die durch ein Objekt, wie eine Pflanze, ganz oder teilweise verdeckt sind, ausgeblendet oder nicht beachtet werden. Weiterhin kann es hilfreich sein, eine Überschneidung mehrerer Erfassungsbereiche von mehreren Sensoren zu begrenzen, um eine Überbestimmtheit zu vermeiden.

Je nach Sensortyp können verschiedene Objekte, die sich in dem Erfassungsbereich befinden, erfasst werden. Alle Sensoren des Parkassistenzsystems sind dazu eingerichtet, Fahrzeuge in dem Erfassungsbereich zu erfassen. Vorteilhaft können die Sensoren dazu eingerichtet sein, Objekte wie Menschen oder größere Tiere zu erfassen. Aus Sicherheitsgründen ist es vorteilhaft, wenn ein unterer Schwellwert einer Objektgröße etwa 10 -20 cm beträgt.

Der bestimmte Erfassungsbereich ist insbesondere in einem bestimmten, einheitlichen Koordinatensystem des Parkassistenzsystems im aufgebauten Zustand bestimmt. Die Position aller räumlich verteilt angeordneten Elemente des Parkassistenzsystems, deren jeweilige Position für den Betrieb des Parkassistenzsystems von Bedeutung ist, ist in dem bestimmten Koordinatensystem bekannt. Das heißt, dass die Koordinaten des jeweiligen Elements bereits in dem bestimmten Koordinatensystem vorliegen, oder aber eine eindeutige Koordinatentransformation zum Transformieren von individuellen Koordinaten eines jeweiligen Elements in das bestimmte Koordinatensystem vorliegt.

Das bestimmte Koordinatensystem kann eigens für das Parkassistenzsystem definiert werden, wobei beispielsweise ein bestimmter Punkt des vorbestimmten Bereichs als Nullpunkt oder Ursprung des Koordinatensystems festgelegt wird und eine bestimmte Länge als grundlegende Maßeinheit festgelegt wird. Das bestimmte Koordinatensystem kann aber auch ein vorbestimmtes Koordinatensystem sein, insbesondere eines globalen satellitengestützten Navigationssystems, wie GPS.

Die bestimmte digitale Karte umfasst insbesondere eine abstrakte Darstellung der für den Betrieb des Parkassistenzsystems relevanten Positionen, beispielsweise die Positionen der Sensoren in dem vorbestimmten Bereich sowie deren jeweiligen Erfassungsbereich, die Flächen des vorbestimmten Bereichs, die als Fahrkorridore oder als Parkplätze vorgesehen sind, und gegebenenfalls weitere Elemente, wie natürliche Hindernisse oder besondere Merkmale des vorbestimmten Bereichs, Verkehrsleitelemente des Parkassistenzsystems und dergleichen mehr. Auf Basis der digitalen Karte kann daher insbesondere eine Pfadplanung und Steuerung der Fahrzeuge erfolgen. Im Betrieb des Parkassistenzsystems kann vorgesehen sein, dass die digitale Karte ferner eine Repräsentation für jedes Fahrzeug oder sonstige mobile Objekt, das sich in dem vorbestimmten Bereich aufhält, umfasst. Dann kann auf Basis der digitalen Karte auch eine Kollisionsberechnung zur Vermeidung von Kollisionen durchgeführt werden.

In einer Ausführungsform basiert der Betrieb des Parkassistenzsystems im aufgebauten Zustand beispielsweise auf den in der Planungsphase bestimmten Positionen von Sensoren und deren Erfassungsbereiche sowie auf der in der Planungsphase bestimmten digitalen Karte des vorbestimmten Bereichs. Hierbei ist beim Aufbau des Parkassistenzsystems darauf zu achten, dass die Sensoren mit hoher Genauigkeit so angeordnet und ausgerichtet werden, wie in der Planungsphase geplant wurde. Die Pfadplanung für einzelne Fahrzeuge im Betrieb erfolgt auf Grundlage der vorab bestimmten digitalen Karte. Dies hat den Vorteil, dass die Sensoren für den Betrieb in dem Parkassistenzsystem lediglich dazu eingerichtet sein müssen, ihr jeweiliges Sensorsignal drahtlos zu übertragen. Andererseits ist diese Ausführungsform wenig flexibel in Bezug auf tatsächliche Gegebenheiten an dem bestimmten Ort, die in der Planungsphase möglicherweise nicht bekannt waren, sowie bei einer möglicherweise gewünschten späteren Erweiterung des Parkassistenzsystems mit zusätzlichen Sensoren.

Zum drahtlosen Übertragen der Sensorsignale kommt beispielsweise ein drahtloses Nahbereichsnetzwerk zum Einsatz, wie ein WLAN. Es kann aber auch ein Mobilfunknetzwerk oder eine andere bekannte drahtlose Netzwerktechnologie verwendet werden.

Die Steuereinrichtung ist zumindest teilweise hardwaretechnisch implementiert. Die Steuereinrichtung kann spezifische Hardware, wie einen ASIC (Applicaiton Specific Implemented Circuit), oder auch allgemein nutzbare Hardware, wie einen Mikroprozessor zur Ausführung eines Computerprogramms, umfassen. Das heißt, dass die Steuereinrichtung teilweise auch softwaretechnisch implementiert sein kann. Hierbei umfasst die Steuereinrichtung ein Computerprogrammprodukt, eine Funktion, eine Routine, ein Algorithmus, einen Programmcode und/oder ein ausführbares Objekt.

Die Steuereinrichtung ist dazu eingerichtet ist, die Sensorsignale von den Sensoren zu empfangen, eine jeweilige Position der Fahrzeuge in Abhängigkeit der empfangenen Sensorsignale zu ermitteln und jedes der Fahrzeuge in Abhängigkeit von den ermittelten Positionen der Fahrzeuge und von einer bestimmten digitalen Karte des vorbestimmten Bereichs zu steuern. Man kann auch sagen, dass die Steuereinrichtung eine Empfangseinheit zum empfangen der Sensorsignale der Sensoren, eine Ermittlungseinheit zum Ermitteln einer jeweiligen Position der Fahrzeuge in Abhängigkeit der empfangenen Sensorsignale und eine Steuereinheit zum Steuern der Fahrzeuge in Abhängigkeit von der jeweiligen ermittelten Position und von der bestimmten digitalen Karte. Die jeweilige Einheit kann hardwaretechnisch und/oder softwaretechnisch implementiert sein. Bei einer hardwaretechnischen Implementierung kann die jeweilige Einheit zum Beispiel als Computer oder als Mikroprozessor ausgebildet sein. Bei einer softwaretechnischen Implementierung kann die jeweilige Einheit als Computerprogrammprodukt, als eine Funktion, als eine Routine, als ein Algorithmus, als Teil eines Programmcodes oder als ausführbares Objekt ausgebildet sein.

Das Steuern der Fahrzeuge umfasst beispielsweise ein Ermitteln einer jeweiligen Trajektorie für ein jeweiliges Fahrzeug. Die Trajektorie führt beispielsweise von einer aktuellen Position des Fahrzeugs zu einer Zielposition. Die Zielposition ist insbesondere ein bestimmter Parkplatz innerhalb des vorbestimmten Bereichs, oder ist ein Übergabereich, in dem ein Nutzer das Fahrzeug von dem Parkassistenzsystem übernimmt. Die Trajektorie wird insbesondere auf Basis der bestimmten digitalen Karte ermittelt, die die vorgesehenen Fahrkorridore und Parkplätze umfasst. Auf Basis der ermittelten Trajektorie wird das Fahrzeug derart gesteuert, dass es die ermittelte Trajektorie abfährt. Hierzu überträgt das Parkassistenzsystem beispielsweise entsprechende Steuerbefehle an das Fahrzeug. Zum Übertragen der Steuerbefehle kommt vorzugsweise eine drahtlose Kommunikationstechnologie zum Einsatz, wie ein WLAN, eine Mobilfunkverbindung oder dergleichen.

In Ausführungsformen umfasst das transportable Parkassistenzsystem einen Sender, der zum Übertragen von Steuerbefehlen an die Fahrzeuge eingerichtet ist.

Das transportable Parkassistenzsystems ist insbesondere zur Verwendung in einem nicht überdachten Bereich, also im Freien, oder in Hallen mit sehr hohem Dach, geeignet. Vorteilhaft ist zudem, wenn der vorbestimmte Bereich im Wesentlichen frei von Hindernissen ist, die Abschattungen der Erfassungsbereiche verursachen können. In diesem Fall genügen vergleichsweise wenige Sensoren, um große Bereiche zu erfassen und somit durch das Parkassistenzsystem nutzbar zu machen.

Gemäß einer Ausführungsform des transportablen Parkassistenzsystems weisen die Sensoren jeweils einen Positionssensor auf, der zum Ermitteln und Ausgeben einer Position des jeweiligen Sensors im aufgebauten Zustand des Parkassistenzsystems eingerichtet ist, wobei die Steuereinrichtung zum Empfangen der ausgegebenen Position und zum Ermitteln des bestimmten Erfassungsbereichs des jeweiligen Sensors in der bestimmten digitalen Karte auf Basis der empfangenen Position eingerichtet ist.

Der Positionssensor ist beispielsweise ein GPS-Sensor, der die Position des jeweiligen Sensors in einem GPS-Koordinatensystem ermittelt und ausgibt. Alternativ oder zusätzlich kann vorgesehen sein, dass die Positionssensoren unterschiedlicher Sensoren ihre jeweilige Position relativ zu den anderen Sensoren ermitteln. Hierbei sind die Positionssensoren insbesondere zum Durchführen einer gegenseitigen Triangulation und/oder einer Multilateration eingerichtet. Ein auf dieses Weise ermitteltes Netzwerk relativer Positionen kann an einem bestimmten Referenzpunkt, beispielsweise ein bestimmter Sensor, an der bestimmten digitalen Karte ausgerichtet werden.

Die ausgegebene Position umfasst insbesondere eine Ausrichtung des jeweiligen Sensors. Die Ausrichtung ist beispielsweise durch einen Azimutwinkel und einen Elevationswinkel bestimmt, wobei sich diese beispielsweise auf einen Mittelpunkt des Erfassungsbereichs des Sensors beziehen (das heißt, dass der Mittelpunkt des Erfassungsbereichs ausgehend von dem Sensor in der angegebenen Richtung liegt). Die Ausrichtung steht somit in einem festen, vorgegebenen Bezug zu dem Erfassungsbereich des jeweiligen Sensors.

Auf Basis der empfangenen Position ermittelt die Steuereinrichtung den jeweiligen bestimmten Erfassungsbereich in der bestimmten digitalen Karte. Damit wird der Erfassungsbereich des jeweiligen Sensors in Bezug zu dem Koordinatensystem der digitalen Karte gesetzt. Man kann auch sagen, dass der Erfassungsbereich kalibriert wird.

Diese Ausführungsform hat somit den Vorteil, dass die Sensoren beim Aufbauen des Parkassistenzsystems flexibel anordenbar sind, um den jeweiligen Gegebenheiten es bestimmten Orts gerecht zu werden. Abweichungen von der Anordnung der Planungsphase sind unkritisch, solange der teil des vorbestimmten Bereichs, in dem die Fahrzeuge gesteuert werden, vollständig von den Sensoren erfasst wird. Insbesondere entfällt auch eine aufwändige manuelle Vermessung der Sensorpositionen und deren jeweiliger Ausrichtung, da die Sensoren ihre Position selbst ermitteln und übertragen.

Gemäß einer weiteren Ausführungsform des transportablen Parkassistenzsystems umfasst dieses einen mobilen Positionssensor, der zum Ermitteln und Ausgeben seiner Position eingerichtet ist, wobei die Steuereinrichtung zum Empfangen der ausgegebenen Position und zum Empfangen einer der ausgegebenen Positionen zugeordneten Flächenbestimmungsinformation eingerichtet ist, und ferner zum Ermitteln der bestimmten digitalen Karte des vorbestimmten Bereichs in Abhängigkeit der empfangenen Position und der zugeordneten Flächenbestimmungsinformation eingerichtet ist.

Bei dieser Ausführungsform kann die bestimmte digitale Karte erst während oder nach dem Aufbauen des Parkassistenzsystems festgelegt werden. Damit kann insbesondere eine aufwändige exakte Planung und Aufstellung des Parkassistenzsystems entfallen. Das Parkassistenzsystem ist damit sehr flexibel einsetzbar.

Beispielsweise werden zunächst alle Sensoren das Parkassistenzsystem aufgebaut und wie vorstehend beschrieben deren Erfassungsbereiche ermittelt. Sofern zu diesem Zeitpunkt die bestimmte digitale Karte noch nicht bestimmt wurde, so bilden beispielsweise die Positionen der Sensoren und die Erfassungsbereiche der Sensoren die Grundlage für das Ermitteln der digitalen Karte. Anschließend wird der mobile Positionssensor durch den vorbestimmten Bereich geführt. Hierbei wird für jede Position des Positionssensors eine Flächenbestimmungsinformation bestimmt, die an die Steuereinrichtung übertragen wird, welche die Flächenbestimmungsinformation der jeweiligen Position des Positionssensors zuordnet. Auf diese Weise wird der Teil der vorbestimmten Fläche, in dem die Fahrzeuge gesteuert werden sollen, abgerastert. Der vorbestimmte Bereich wird auf dieses Weise beispielsweise in Teilflächen unterteilt, die beispielsweise jeweils 20 cm x 20 cm groß sind, wobei jeder dieser Teilflächen die jeweils zutreffende Flächenbestimmungsinformation zugeordnet ist. Die Flächenbestimmungsinformation umfasst beispielsweise die Angabe, dass es sich um einen Fahrkorridor, gegebenenfalls mit einer bestimmten Fahrtrichtung, einen Fußweg, einen Rettungsweg, einen Parkplatz, gegebenenfalls mit einer Angabe zu einem bestimmten Fahrzeugtyp und/oder eine Priorisierung, oder dergleichen mehr handelt.

Dieser Vorgang erfolgt insbesondere unter Aufsicht eines Operators, der die jeweilige Flächenbestimmungsinformation bestimmt. Beispielsweise läuft oder fährt der Operator mit dem Positionssensor den Bereich des vorbestimmten Bereichs ab, der als Fahrkorridor vorgesehen ist, und bestimmt entsprechend die Flächenbestimmungsinformation.

Gemäß einer weiteren Ausführungsform des transportablen Parkassistenzsystems umfasst dieses einen mobilen Positionssensor, der zum Ermitteln und Ausgeben seiner Position unabhängig von dem Parkassistenzsystem eingerichtet ist, wobei die Sensoren zum Erfassen des Positionssensors eingerichtet sind, und wobei die Steuereinrichtung zum Empfangen der von dem Positionssensor ausgegebenen Position eingerichtet ist, und ferner zum Vergleichen der von dem Positionssensor empfangenen Position und der auf Basis der Sensorsignale ermittelten Position des Positionssensors eingerichtet ist, um die bestimmte digitale Karte zu validieren.

In dieser Ausführungsform lässt sich vorteilhaft einfach überprüfen, ob die Positionen unterschiedlicher Elemente in der bestimmten digitalen Karte, insbesondere die Positionen der Sensoren sowie die Positionen der Erfassungsbereiche oder die Grenzen der Erfassungsbereiche, korrekt sind. Man kann auch sagen, dass hiermit die bestimmte digitale Karte validiert wird.

Gemäß einer weiteren Ausführungsform des transportablen Parkassistenzsystems umfasst dieses eine Anzahl von Verkehrsleitelementen umfasst, die in dem vorbestimmten Bereich anordenbar sind, wobei jedes der Verkehrsleitelemente einen Positionssensor aufweist, der zum Ermitteln und Ausgeben einer Position des jeweiligen Verkehrsleitelements im aufgebauten Zustand des Parkassistenzsystems eingerichtet ist, wobei die Steuereinrichtung zum Empfangen der ausgegebenen Position und zum Ermitteln der digitalen Karte auf Basis der empfangenen Position des jeweiligen Verkehrsleitelements eingerichtet ist.

Gemäß einer weiteren Ausführungsform des transportablen Parkassistenzsystems ist die Steuereinrichtung zum Validieren der Steuerung der Fahrzeuge unter Verwendung eines Validierungsfahrzeugs eingerichtet, wobei das Validierungsfahrzeug dazu eingerichtet ist, von dem Parkassistenzsystem gesteuert zu werden und dazu eingerichtet ist, seine Position unabhängig von dem Parkassistenzsystem zu ermitteln, wobei die Steuereinrichtung zum Vergleichen der auf Basis der Anzahl von Sensoren ermittelten Position und der von dem Validierungsfahrzeug ermittelten Position eingerichtet ist.

Mittels des Validierungsfahrzeugs kann beispielsweise der Nachweis erbracht werden, dass eine Steuerung der Fahrzeuge durch das Parkassistenzsystem vorschriftsgemäß, insbesondere bezüglich einer Präzision der Steuerung, erfolgt. Sofern nationale oder regionale Vorgaben vorsehen, dass eine Abnahme zum Erteilen einer Betriebsgenehmigung für das Parkassistenzsystem notwendig ist, kann dies hierdurch vereinfacht und automatisiert werden.

Gemäß einer weiteren Ausführungsform des transportablen Parkassistenzsystems umfasst die Anzahl von Sensoren eine Kamera, ein Radar und/oder ein Lidar umfasst.

In Ausführungsformen können Kameras mit erweitertem Spektralbereich verwendet werden, der beispielswiese den visuellen Spektralbereich und einen nahen Infrarotbereich und/oder UV-Bereich umfasst.

Gemäß einer weiteren Ausführungsform des transportablen Parkassistenzsystems umfasst dieses eine Anzahl von Haltemitteln umfasst, wobei ein jeweiliges Haltemittel zum Halten eines jeweiligen Sensors an einer bestimmten Position in dem vorbestimmten Bereich eingerichtet ist, wobei die Sensoren zum wiederlösbaren Befestigen an den Haltemitteln eingerichtet sind.

Die Haltemittel umfassen beispielsweise ein Stativ, ein Mast, ein Gestell, ein Gerüst, ein Drahtseil, einen Ausleger, einen Kran und dergleichen mehr. Es kann vorgesehen sein, dass ein Haltemittel mehr als einen Sensor hält.

Gemäß einer weiteren Ausführungsform des transportablen Parkassistenzsystems weisen die Sensoren jeweils ein wetterfestes Gehäuse auf, das einen Schutz für eine Elektronik der Sensoren vor Witterungseinflüssen bereitstellt.

Das Gehäuse kann aus Kunststoff, Metall, einem Kompositmaterial oder dergleichen hergestellt sein. Das Gehäuse ist insbesondere wasserdicht. Ferner ist das Gehäuse vorzugsweise derart ausgestaltet, dass der Sensor und dessen Elektronik bei Sonneneinstrahlung ausreichend gekühlt bleiben, um einen Dauerbetrieb bereitzustellen. Hierzu kann das Gehäuse beispielsweise Kühlflächen oder Kühlkörper bereitstellen. Weiterhin kann das Gehäuse eine Öffnung für eine Antenne aufweisen, die mit dem Sensor verbindbar ist und über die der Sensor sein Sensorsignal an die Steuereinrichtung überträgt.

Gemäß einer weiteren Ausführungsform des transportablen Parkassistenzsystems umfasst dieses eine Anzahl von mobilen Energiequellen, um die die Anzahl von Sensoren im aufgebauten Zustand des Parkassistenzsystems mit Energie zu versorgen.

Die mobile Energiequelle ist beispielsweise eine Batterie.

In Ausführungsformen ist ein Photovoltaik-Modul vorgesehen, das die Batterie bei Sonnenstrahlung mit elektrischer Energie auflädt, um die Reichweite der Batterie zu erhöhen.

Gemäß einem zweiten Aspekt wird ein Verfahren zum Betreiben eines transportablen Parkassistenzsystems vorgeschlagen. Das transportable Parkassistenzsystem ist zum Aufbau und Abbau an einer Mehrzahl unterschiedlicher Orte geeignet und ist im aufgebauten Zustand an einem bestimmten Ort zum Steuern einer Anzahl von Fahrzeugen innerhalb eines vorbestimmten Bereichs des bestimmten Orts eingerichtet. Das Verfahren umfasst die Schritte:
a) Anordnen einer Anzahl von Sensoren an jeweiligen bestimmten Positionen in dem vorbestimmten Bereich gemäß einer bestimmten Anordnung,
b) Erfassen von in einem jeweiligen bestimmten Erfassungsbereichs des vorbestimmten Bereichs befindlichen Fahrzeugen mittels der Sensoren und drahtloses Übertragen eines entsprechenden Sensorsignals,
c) Empfangen der Sensorsignale von den Sensoren,
d) Ermitteln einer jeweiligen Position der Fahrzeuge in Abhängigkeit der empfangenen Sensorsignale, und
e) Steuern der Fahrzeuge in Abhängigkeit von der jeweiligen ermittelten Position und von einer bestimmten digitalen Karte des vorbestimmten Bereichs.

Die für das vorgeschlagene transportable Parkassistenzsystem beschriebenen Ausführungsformen und Merkmale gelten für das vorgeschlagene Verfahren entsprechend. Das Verfahren wird vorzugsweise mit dem transportablen Parkassistenzsystem gemäß dem ersten Aspekt durchgeführt. Die für das transportable Parkassistenzsystem gemäß dem ersten Aspekt beschriebenen Vorteile und Definitionen gelten für das vorgeschlagene Verfahren entsprechend.

Weiterhin wird ein Computerprogrammprodukt vorgeschlagen, welches Befehle umfasst, die bei der Ausführung des Programms durch einen Computer diesen veranlassen, die Schritte b) - e) des vorstehend beschriebenen Verfahrens auszuführen.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1A: zeigt eine erste schematische Darstellung eines Ausführungsbeispiels eines transportablen Parkassistenzsystems im aufgebauten Zustand;
- Fig. 1B: zeigt eine zweite schematische Darstellung des Ausführungsbeispiels eines transportablen Parkassistenzsystems im aufgebauten Zustand;
- Fig. 2: zeigt schematisch ein Übertragen von Sensorsignalen und Steuersignalen;
- Fig. 3: zeigt eine schematische Darstellung eines Ausführungsbeispiels eines transportablen Parkassistenzsystems im abgebauten Zustand; und
- Fig. 4: zeigt ein schematisches Blockschaltbild eines Ausführungsbeispiels für ein Verfahren zum Betreiben eines Parkassistenzsystems.

In den Figuren sind gleiche oder funktionsgleiche Elemente mit denselben Bezugszeichen versehen worden, sofern nichts anderes angegeben ist.

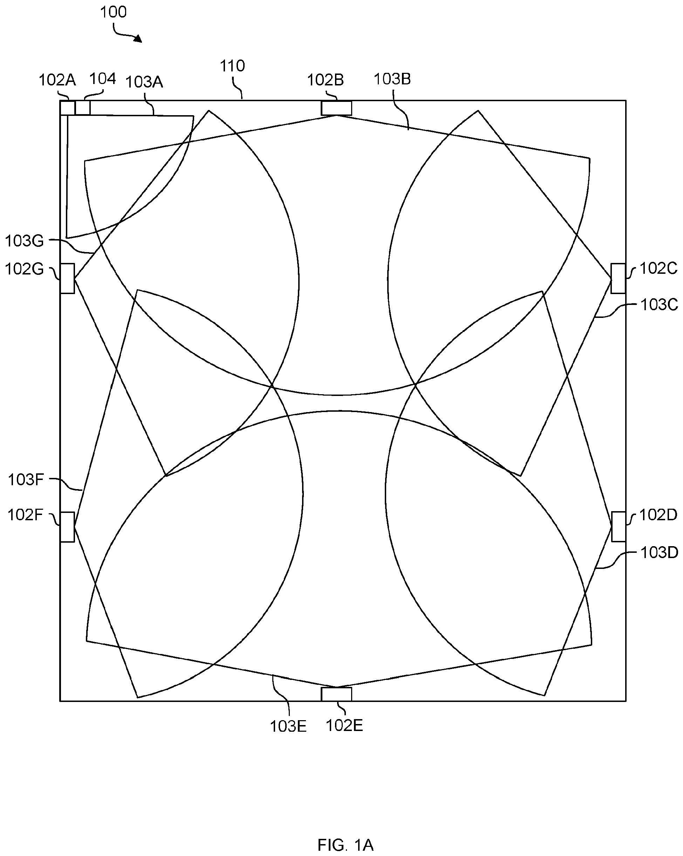

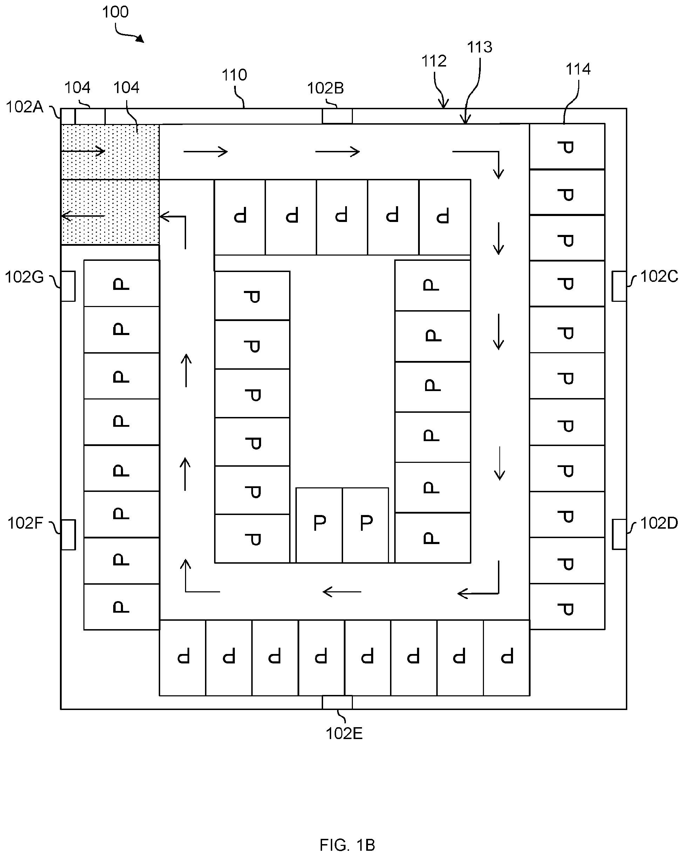

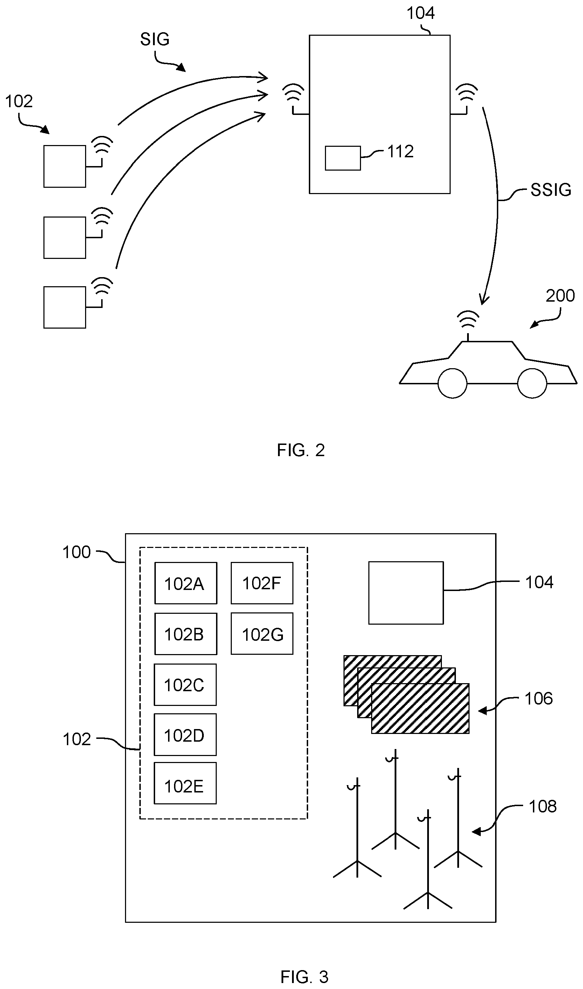

Die Fig. 1A und 1B zeigen jeweils eine schematische Darstellung eines Ausführungsbeispiels eines transportablen Parkassistenzsystems 100 im aufgebauten Zustand. Aus Gründen der Übersicht ist die Darstellung in zwei Abbildungen aufgeteilt, die jeweils unterschiedliche Aspekte des transportablen Parkassistenzsystems 100 zeigen. Das transportable Parkassistenzsystem 100 umfasst in diesem Beispiel sieben Sensoren 102A - 102G und eine Steuereinrichtung 104. Die Sensoren 102A - 102G sind beispielsweise an Haltemitteln 108 (siehe Fig. 3) befestigt und in einem vorbestimmten Bereich 110 an bestimmten Positionen angeordnet. Jeder der Sensoren 102A - 102G weist einen bestimmten Erfassungsbereich 103A - 103G auf, wie in der Fig. 1A schematisch dargestellt. Die Sensoren 102A - 102G sind jeweils dazu eingerichtet, Fahrzeuge 200 (siehe Fig. 2), die sich in ihrem jeweiligen Erfassungsbereich 103A - 103G befinden, zu erfassen und ein entsprechendes Sensorsignal SIG (siehe Fig. 2) an die Steuereinrichtung 104 zu übertragen. Die Steuereinrichtung 104 empfängt die Sensorsignale SIG der Sensoren 102A - 102G und ermittelt auf deren Basis die jeweilige Position der Fahrzeuge 200.

Die Position der Fahrzeuge 200 bezieht sich dabei auf ein bestimmtes Koordinatensystem, das jedem Punkt des vorbestimmten Bereichs 110 eine Position umfassend wenigstens zwei Koordinaten zuordnet. In der Fig. 1B ist der vorbestimmte Bereich 110 in Form einer bestimmten digitalen Karte 112 dargestellt. Die bestimmte digitale Karte 112 umfasst beispielsweise eine Kennzeichnung der Positionen der Sensoren 102A - 102G und deren Erfassungsbereiche 103A - 103G (in der Fig. 1B aus Gründen der Übersicht nicht eingezeichnet), und umfasst insbesondere eine Einteilung des vorbestimmten Bereichs 110 in einen Fahrkorridor 113, mehrere Parkplätze 114 (aus Gründen der Übersicht ist nur einer der Parkplätze mit einem Bezugszeichen gekennzeichnet), einen Übergabebereich 115 sowie ungenutzte Bereiche (ohne Bezugszeichen).

Der Fahrkorridor 113 ist in diesem Beispiel als eine Einbahnstraße vorgesehen. In dem Übergabebereich 115, der insbesondere von dem Sensor 102A erfasst wird, erfolgt beispielsweise die Übergabe des jeweiligen Fahrzeugs 200 von dem Nutzer das Fahrzeugs 200 an das Parkassistenzsystem 100 zwecks automatisierten Einparkens und Ausparkens. Von hier an steuert das Parkassistenzsystems 100 die Fahrzeuge 200 und führt diese beispielsweise zu einem bestimmten Parkplatz 114. Wenn der Nutzer das Fahrzeug 200 wieder übernehmen möchte, steuert das Parkassistenzsystem 100 das jeweilige Fahrzeug 200 von dem Parkplatz 114 zu dem Übergabebereich 115.

Die Steuerung der Fahrzeuge 200 ist beispielhaft anhand der Fig. 2 dargestellt. Während der Steuerung der Fahrzeuge 200 empfängt die Steuereinrichtung 104 fortlaufend von den Sensoren 102, 102A - 102G aktuelle Sensorsignale SIG, auf deren Basis diese die Position der Fahrzeuge 200 in der bestimmten digitalen Karte 112 ermittelt. Man kann auch sagen, dass die Steuereinrichtung 104 die Bewegung der Fahrzeuge 200 durch die Sensoren 102A - 102G überwacht und in der Art eines Regelkreises deren Bewegung durch entsprechende Steuersignale SSIG steuert. Das Fahrzeug 200 ist beispielsweise ein Personenkraftwagen oder auch ein Lastkraftwagen. Das Fahrzeug 200 umfasst vorzugsweise insbesondere einen Empfänger zum Empfangen des Steuersignals SSIG von der Steuereinrichtung 104 des Parkassistenzsystems 100, sowie eine System, das zum Ausführen der empfangenen Steuersignale SSIG eingerichtet ist. Man kann auch sagen, dass das Fahrzeug 200 durch das Parkassistenzsystem 100 fernsteuerbar ist.

Fig. 3 zeigt eine schematische Darstellung eines Ausführungsbeispiels eines transportablen Parkassistenzsystems 100 im abgebauten Zustand. In diesem Beispiel umfasst das Parkassistenzsystem 100 eine Anzahl 102 von Sensoren 102A - 102G, die Steuereinrichtung 104, eine Anzahl von Verkehrsleitelementen 106, die jeweils zum Ermitteln ihrer Position und zum Übertragen der ermittelten Position an die Steuereinrichtung 104 eingerichtet sind, und eine Anzahl von Haltemitteln 108, die zum Halten der Sensoren 102A - 102G an bestimmten Positionen in dem vorbestimmten Bereich 110 im aufgebauten Zustand des Parkassistenzsystems 100 eingerichtet sind. Es sei angemerkt, dass die Verkehrsleitelemente 106 und die Haltemittel 108 optional sind und keine notwendigen Bestandteile des transportablen Parkassistenzsystem 100 darstellen. Dieses Parkassistenzsystem 100 kann kompakt eingelagert und leicht transportiert werden, beispielsweise mit einem LKW oder dergleichen.

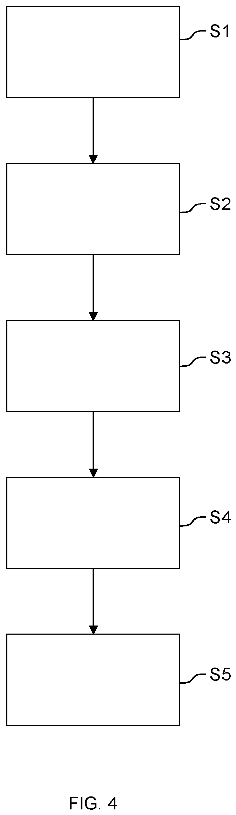

Fig. 4 zeigt ein schematisches Blockschaltbild eines Ausführungsbeispiels für ein Verfahren zum Betreiben eines transportablen Parkassistenzsystems 100, beispielsweise des Parkassistenzsystems 100 der Fig. 1 oder 3. Das Parkassistenzsystem 100 ist zum Aufbau und Abbau an einer Mehrzahl unterschiedlicher Orte geeignet und ist im aufgebauten Zustand an einem bestimmten Ort zum Steuern einer Anzahl von Fahrzeugen 200 (siehe Fig. 2) innerhalb eines vorbestimmten Bereichs 110 (siehe Fig. 1A, 1B) des bestimmten Orts eingerichtet. In einem ersten Schritt S1 eine Anzahl 102 (siehe Fig. 2 oder 3) von Sensoren 102A - 102G (siehe Fig. 1A, 1B oder 3) an jeweiligen bestimmten Positionen in dem vorbestimmten Bereich 110 gemäß einer bestimmten Anordnung angeordnet. In einem zweiten Schritt S2 werden Fahrzeuge 200, die sich in einem jeweiligen bestimmten Erfassungsbereich 103A - 103G (siehe Fig. 1A) des vorbestimmten Bereichs 110 befinden, mittels der Sensoren 102A - 102G erfasst es wird ein entsprechendes Sensorsignal SIG (siehe Fig. 2) drahtlos übertragen. In einem dritten Schritt S3 werden die Sensorsingale SIG empfangen. Ion einem vierten Schritt S4 wird eine jeweilige Position der Fahrzeuge 200 in Abhängigkeit der empfangenen Sensorsignale SIG ermittelt. In einem fünften Schritt S5 werden die Fahrzeuge 200 in Abhängigkeit von der jeweiligen ermittelten Position und von einer bestimmten digitalen Karte 112 (siehe Fig. 1B oder 2) des vorbestimmten Bereichs 110 gesteuert. Dies umfasst insbesondere ein Ermitteln einer Trajektorie für ein jeweiliges Fahrzeug sowie ein Übertragen eines Steuersignals SSIG (siehe Fig. 2) das zu steuernde Fahrzeug 200.

Obwohl die vorliegende Erfindung anhand von Ausführungsbeispielen beschrieben wurde, ist sie vielfältig modifizierbar.

### BEZUGSZEICHENLISTE

- 100: transportables Parkassistenzsystem
- 102: Anzahl von Sensoren
- 102A - 102G: Sensoren
- 103A - 103G: Erfassungsbereiche
- 104: Steuereinrichtung
- 106: Verkehrsleitelemente
- 108: Haltemittel
- 110: vorbestimmter Bereich
- 112: digitale Karte
- 113: Fahrkorridor
- 114: Parkplatz
- 115: Übergabebereich
- 200: Fahrzeug

- S1 - S5: Verfahrensschritt
- SIG: Sensorsignal
- SSIG: Steuersignal

## Patentansprüche

1. Transportables Parkassistenzsystem (100), welches zum Aufbau und Abbau an einer Mehrzahl unterschiedlicher Orte geeignet ist und welches im aufgebauten Zustand an einem bestimmten Ort zum Steuern einer Anzahl von Fahrzeugen (200) innerhalb eines vorbestimmten Bereichs (110) des bestimmten Orts eingerichtet ist, mit
einer Anzahl (102) von in dem vorbestimmten Bereich (110) anordenbaren Sensoren (102A - 102G), wobei jeder der Sensoren (102A - 102G) zum Erfassen von in einem jeweiligen bestimmten Erfassungsbereich (103A - 103G) des vorbestimmten Bereichs (110) befindlichen Fahrzeugen (200) und zum drahtlosen Übertragen eines entsprechenden Sensorsignals (SIG) eingerichtet ist, und mit
einer Steuereinrichtung (104), die dazu eingerichtet ist, die Sensorsignale (SIG) von den Sensoren (102A - 102G) zu empfangen, eine jeweilige Position der Fahrzeuge (200) in Abhängigkeit der empfangenen Sensorsignale (SIG) zu ermitteln, und jedes Fahrzeug (200) in Abhängigkeit von den ermittelten Positionen der Fahrzeuge (200) und von einer bestimmten digitalen Karte (112) des vorbestimmten Bereichs (110) zu steuern.

2. Transportables Parkassistenzsystem nach Anspruch 1, **dadurch gekennzeichnet, dass** die Sensoren (102A - 102G) jeweils einen Positionssensor aufweisen, der zum Ermitteln und Ausgeben einer Position des jeweiligen Sensors (102A - 102G) im aufgebauten Zustand des Parkassistenzsystems (100) eingerichtet ist, wobei die Steuereinrichtung (104) zum Empfangen der ausgegebenen Position und zum Ermitteln des bestimmten Erfassungsbereichs (103A - 103G) des jeweiligen Sensors (102A - 102G) in der bestimmten digitalen Karte (112) auf Basis der empfangenen Position eingerichtet ist.

3. Transportables Parkassistenzsystem nach Anspruch 1 oder 2, **dadurch gekennzeichnet, dass** dieses einen mobilen Positionssensor umfasst, der zum Ermitteln und Ausgeben seiner Position eingerichtet ist, wobei die Steuereinrichtung (104) zum Empfangen der ausgegebenen Position und zum Empfangen einer der ausgegebenen Positionen zugeordneten Flächenbestimmungsinformation (113, 114, 115) eingerichtet ist, und ferner zum Ermitteln der bestimmten digitalen Karte (112) des vorbestimmten Bereichs (110) in Abhängigkeit der empfangenen Position und der zugeordneten Flächenbestimmungsinformation (113, 114, 115) eingerichtet ist.

4. Transportables Parkassistenzsystem nach einem der vorhergehenden Ansprüche, **dadurch gekennzeichnet, dass** dieses eine Anzahl von Verkehrsleitelementen (106) umfasst, die in dem vorbestimmten Bereich (110) anordenbar sind, wobei jedes der Verkehrsleitelemente (106) einen Positionssensor aufweist, der zum Ermitteln und Ausgeben einer Position des jeweiligen Verkehrsleitelements (106) im aufgebauten Zustand des Parkassistenzsystems (100) eingerichtet ist, wobei die Steuereinrichtung (104) zum Empfangen der ausgegebenen Position und zum Ermitteln der bestimmten digitalen Karte (112) des vorbestimmten Bereichs (110) auf Basis der empfangenen Position des jeweiligen Verkehrsleitelements (106) eingerichtet ist.

5. Transportables Parkassistenzsystem nach einem der vorhergehenden Ansprüche, **dadurch gekennzeichnet, dass** dieses einen mobilen Positionssensor umfasst, der zum Ermitteln und Ausgeben seiner Position unabhängig von dem Parkassistenzsystem (100) eingerichtet ist, wobei die Sensoren (102A - 102G) zum Erfassen des Positionssensors eingerichtet sind, und wobei die Steuereinrichtung (104) zum Empfangen der von dem Positionssensor ausgegebenen Position eingerichtet ist, und ferner zum Vergleichen der von dem Positionssensor empfangenen Position und der auf Basis der Sensorsignale (SIG) ermittelten Position des Positionssensors eingerichtet ist, um die bestimmte digitale Karte (112) zu validieren.

6. Transportables Parkassistenzsystem nach einem der vorhergehenden Ansprüche, **dadurch gekennzeichnet, dass** die Steuereinrichtung (104) zum Validieren der Steuerung der Fahrzeuge (200) unter Verwendung eines Validierungsfahrzeugs eingerichtet ist, wobei das Validierungsfahrzeug dazu eingerichtet ist, von dem Parkassistenzsystem (100) gesteuert zu werden und dazu eingerichtet ist, seine Position unabhängig von dem Parkassistenzsystem (100) zu ermitteln, wobei die Steuereinrichtung (104) zum Vergleichen der auf Basis der Anzahl (102) von Sensoren (102A - 102G) ermittelten Position und der von dem Validierungsfahrzeug ermittelten Position eingerichtet ist.

7. Transportables Parkassistenzsystem nach einem der vorhergehenden Ansprüche, **dadurch gekennzeichnet, dass** die Anzahl (102) von Sensoren (102A - 102G) eine Kamera, ein Radar und/oder ein Lidar umfasst.

8. Transportables Parkassistenzsystem nach einem der vorhergehenden Ansprüche, **dadurch gekennzeichnet, dass** dieses ferner eine Anzahl von Haltemitteln (108) umfasst, wobei ein jeweiliges Haltemittel (108) zum Halten eines jeweiligen Sensors (102A - 102G) an einer bestimmten Position in dem vorbestimmten Bereich (110) eingerichtet ist, wobei die Sensoren (102A - 102G)zum wiederlösbaren Befestigen an den Haltemitteln (108) eingerichtet sind.

9. Transportables Parkassistenzsystem nach einem der vorhergehenden Ansprüche, **dadurch gekennzeichnet, dass** die Sensoren (102A - 102G) jeweils ein wetterfestes Gehäuse aufweisen, das einen Schutz für eine Elektronik der Sensoren vor Witterungseinflüssen bereitstellt.

10. Transportables Parkassistenzsystem nach einem der vorhergehenden Ansprüche, **gekennzeichnet durch** eine Anzahl von mobilen Energiequellen, die dazu eingerichtet sind, die Anzahl (102) von Sensoren (102A - 102G) im aufgebauten Zustand des Parkassistenzsystems (100) mit Energie zu versorgen.

11. Verfahren zum Bereitstellen und Betreiben eines transportablen Parkassistenzsystems (100), welches zum Aufbau und Abbau an einer Mehrzahl unterschiedlicher Orte geeignet ist und welches im aufgebauten Zustand an einem bestimmten Ort zum Steuern einer Anzahl von Fahrzeugen (200) innerhalb eines vorbestimmten Bereichs (110) des bestimmten Orts eingerichtet ist, das Verfahren umfassend die Schritte:
a) Anordnen (S1) einer Anzahl (102) von Sensoren (102A - 102G) an jeweiligen bestimmten Positionen in dem vorbestimmten Bereich (110) gemäß einer bestimmten Anordnung,
b) Erfassen (S2) von in einem jeweiligen bestimmten Erfassungsbereich (103A - 103G) des vorbestimmten Bereichs (110) befindlichen Fahrzeugen (200) mittels der Sensoren (102A - 102G) und drahtloses Übertragen eines entsprechenden Sensorsignals (SIG),
c) Empfangen (S3) der Sensorsignale (SIG),
d) Ermitteln (S4) einer jeweiligen Position der Fahrzeuge (200) in Abhängigkeit der empfangenen Sensorsignale (SIG), und
e) Steuern (S5) der Fahrzeuge (200) in Abhängigkeit von der jeweiligen ermittelten Position und von einer bestimmten digitalen Karte (112) des vorbestimmten Bereichs (110).

12. Computerprogrammprodukt, umfassend Befehle, die bei der Ausführung des Programms durch einen Computer diesen veranlassen, die Schritte b) - e) des Verfahrens nach Anspruch 11 auszuführen.

## Claims

1. Portable parking assistance system (100), which is suitable for being set up and dismantled at a plurality of different locations and which is designed, when set up at a particular location, to control a number of vehicles (200) within a predetermined region (110) of the particular location, having
a number (102) of sensors (102A - 102G) which can be arranged in the predetermined region (110), wherein each of the sensors (102A - 102G) is designed to detect vehicles (200) located in a respective specific detection range (103A - 103G) of the predetermined region (110) and to wirelessly transmit a corresponding sensor signal (SIG), and having
a control device (104), which is designed to receive the sensor signals (SIG) from the sensors (102A - 102G), to determine a respective position of the vehicles (200) on the basis of the received sensor signals (SIG), and control each vehicle (200) on the basis of the determined positions of the vehicles (200) and a specified digital map (112) of the predetermined region (110).

2. Portable parking assistance system according to Claim 1, **characterized in that** the sensors (102A - 102G) each have a position sensor, which is designed to determine and output a position of the respective sensor (102A - 102G) when the parking assistance system (100) is set up, wherein the control device (104) is designed to receive the output position and to determine the particular detection range (103A - 103G) of the respective sensor (102A - 102G) in the specified digital map (112) on the basis of the received position.

3. Portable parking assistance system according to Claim 1 or 2, **characterized in that** said system comprises a mobile position sensor which is designed to determine and output its position, wherein the control device (104) is designed to receive the output position and to receive surface determination information (113, 114, 115) assigned to one of the output positions, and further designed to determine the specified digital map (112) of the predetermined region (110) on the basis of the received position and the assigned surface determination information (113, 114, 115).

4. Portable parking assistance system according to any of the preceding claims, **characterized in that** said system comprises a number of traffic control elements (106), which can be arranged in the predetermined region (110), wherein each of the traffic control elements (106) has a position sensor which is designed to determine and output a position of the respective traffic control element (106) when the parking assistance system (100) is set up, wherein the control device (104) is designed to receive the output position and to determine the specified digital map (112) of the predetermined region (110) on the basis of the received position of the respective traffic control element (106).

5. Portable parking assistance system according to any of the preceding claims, **characterized in that** said system comprises a mobile position sensor, which is designed to determine and output its position independently of the parking assistance system (100), wherein the sensors (102A - 102G) are designed to detect the position sensor, and wherein the control device (104) is designed to receive the position output from the position sensor, and further designed to compare the position received from the position sensor and the position of the position sensor determined on the basis of the sensor signals (SIG), in order to validate the specified digital map (112).

6. Portable parking assistance system according to any of the preceding claims, **characterized in that** the control device (104) is designed to validate the control of the vehicles (200) using a validation vehicle, wherein the validation vehicle is designed to be controlled by the parking assistance system (100) and designed to determine its position independently of the parking assistance system (100), wherein the control device (104) is designed to compare the position determined on the basis of the number (102) of sensors (102A - 102G) and the position determined by the validation vehicle.

7. Portable parking assistance system according to any of the preceding claims, **characterized in that** the number (102) of sensors (102A - 102G) comprises a camera, a radar and/or a lidar.

8. Portable parking assistance system according to any of the preceding claims, **characterized in that** said system further comprises a number of holding means (108), wherein each holding means (108) is designed to hold a respective sensor (102A - 102G) at a specific position in the predetermined region (110), wherein the sensors (102A - 102G) are designed to be releasably attached to the holding means (108).

9. Portable parking assistance system according to any of the preceding claims, **characterized in that** the sensors (102A - 102G) each have a weatherproof housing, which provides protection for an electronics unit of the sensors against weather effects.

10. Portable parking assistance system according to any of the preceding claims, **characterized by** a number of mobile energy sources, which are designed to supply the number (102) of sensors (102A - 102G) with energy when the parking assistance system (100) is set up.

11. Method for providing and operating a portable parking assistance system (100), which is suitable for being set up and dismantled at a plurality of different locations and which is designed, when set up at a particular location, to control a number of vehicles (200) within a predetermined region (110) of the particular location, the method comprising the steps of:
a) arranging (S1) a number (102) of sensors (102A - 102G) at respective specific positions in the predetermined region (110) according to a specific arrangement;
b) detecting (S2) vehicles (200) located in a respective specific detection range (103A - 103G) of the predetermined region (110) by means of the sensors (102A - 102G) and wirelessly transmitting a corresponding sensor signal (SIG),
c) receiving (S3) the sensor signals (SIG),
d) determining (S4) a respective position of the vehicles (200) on the basis of the received sensor signals (SIG), and
e) controlling (S5) the vehicles (200) on the basis of the respective determined position and a specified digital map (112) of the predetermined region (110).

12. Computer program product, comprising instructions that, when the program is executed by a computer, cause said computer to carry out the steps b) - e) of the method according to Claim 11.

## Revendications

1. Système d'assistance au stationnement transportable (100), lequel est conçu pour être monté et démonté à une pluralité d'endroits différents et lequel, à l'état monté à un endroit déterminé, est conçu pour commander un certain nombre de véhicules (200) à l'intérieur d'une zone prédéterminée (110) de l'endroit déterminé, comprenant
un nombre (102) de capteurs (102A - 102G) pouvant être disposés dans la zone prédéterminée (110), chacun des capteurs (102A - 102G) étant conçu pour détecter des véhicules (200) qui se trouvent dans une zone de détection (103A - 103G) déterminée respective de la zone prédéterminée (110) et pour transmettre sans fil un signal de capteur (SIG) correspondant, et comprenant
un dispositif de commande (104) qui est conçu pour recevoir les signaux de capteur (SIG) des capteurs (102A - 102G), déterminer une position respective des véhicules (200) en fonction des signaux de capteur (SIG) reçus, et commander chaque véhicule (200) en fonction des positions déterminées des véhicules (200) et d'une carte numérique (112) déterminée de la zone prédéterminée (110).

2. Système d'assistance au stationnement transportable selon la revendication 1, **caractérisé en ce que** les capteurs (102A - 102G) possèdent respectivement un capteur de position qui est conçu pour identifier et émettre une position du capteur (102A - 102G) respectif à l'état monté du système d'assistance au stationnement (100), le dispositif de commande (104) étant conçu pour recevoir la position émise et pour identifier la zone de détection (103A - 103G) déterminée du capteur (102A - 102G) respectif dans la carte numérique (112) déterminée sur la base de la position reçue.

3. Système d'assistance au stationnement transportable selon la revendication 1 ou 2, **caractérisé en ce que** celui-ci comprend un capteur de position mobile qui est conçu pour identifier et émettre sa position, le dispositif de commande (104) étant conçu pour recevoir la position émise et pour recevoir une information de détermination de surface (113, 114, 115) associée aux positions émises, et étant en outre conçu pour identifier la carte numérique (112) déterminée de la zone prédéterminée (110) en fonction de la position reçue et de l'information de détermination de surface (113, 114, 115) associée.

4. Système d'assistance au stationnement transportable selon l'une des revendications précédentes, **caractérisé en ce qu'**il comprend un certain nombre d'éléments de guidage du trafic (106) qui peuvent être disposés dans la zone prédéterminée (110), chacun des éléments de guidage du trafic (106) possédant un capteur de position, lequel est conçu pour identifier et émettre une position de l'élément de guidage de trafic (106) respectif à l'état monté du système d'assistance au stationnement (100), le dispositif de commande (104) étant conçu pour recevoir la position émise et pour identifier la carte numérique (112) déterminée de la zone prédéterminée (110) sur la base de la position reçue de l'élément de guidage de trafic (106) respectif.

5. Système d'assistance au stationnement transportable selon l'une des revendications précédentes, **caractérisé en ce que** celui-ci comprend un capteur de position mobile, lequel est conçu pour identifier et émettre sa position indépendamment du système d'assistance au stationnement (100), les capteurs (102A - 102G) étant conçus pour détecter le capteur de position, et le dispositif de commande (104) étant conçu pour recevoir la position émise par le capteur de position, et étant en outre conçu pour comparer la position reçue par le capteur de position et la position du capteur de position identifiée sur la base des signaux de capteur (SIG), afin de valider la carte numérique (112) déterminée.

6. Système d'assistance au stationnement transportable selon l'une des revendications précédentes, **caractérisé en ce que** le dispositif de commande (104) est conçu pour valider la commande des véhicules (200) en utilisant un véhicule de validation, le véhicule de validation étant conçu pour être commandé par le système d'assistance au stationnement (100) et étant conçu pour identifier sa position indépendamment du système d'assistance au stationnement (100), le dispositif de commande (104) étant conçu pour comparer la position identifiée sur la base du nombre (102) de capteurs (102A - 102G) et la position identifiée par le véhicule de validation.

7. Système d'assistance au stationnement transportable selon l'une des revendications précédentes, **caractérisé en ce que** le nombre (102) de capteurs (102A - 102G) comprend une caméra, un radar et/ou un lidar.

8. Système d'assistance au stationnement transportable selon l'une des revendications précédentes, **caractérisé en ce qu'**il comprend en outre un certain nombre de moyens de maintien (108), un moyen de maintien (108) respectif étant conçu pour maintenir un capteur (102A-102G) respectif dans une position déterminée dans la zone prédéterminée (110), les capteurs (102A-102G) étant conçus pour être fixés de manière amovible aux moyens de maintien (108).

9. Système d'assistance au stationnement transportable selon l'une des revendications précédentes, **caractérisé en ce que** les capteurs (102A - 102G) possèdent respectivement un boîtier résistant aux intempéries, lequel fournit une protection pour une électronique des capteurs contre les intempéries.

10. Système d'assistance au stationnement transportable selon l'une des revendications précédentes, **caractérisé par** un certain nombre de sources d'énergie mobiles qui sont conçues pour alimenter en énergie le nombre (102) de capteurs (102A - 102G) à l'état monté du système d'assistance au stationnement (100).

11. Procédé pour fournir et faire fonctionner un système d'assistance au stationnement transportable (100), lequel est conçu pour être monté et démonté à une pluralité d'endroits différents et lequel, à l'état monté à un endroit déterminé, est conçu pour commander un certain nombre de véhicules (200) à l'intérieur d'une zone prédéterminée (110) de l'endroit déterminé, le procédé comprenant les étapes suivantes :
a) disposition (S1) d'un certain nombre (102) de capteurs (102A-102G) à des positions déterminées respectives dans la zone prédéterminée (110) selon une disposition déterminée,
b) détection (S2) de véhicules (200) qui se trouvent dans une zone de détection (103A - 103G) déterminée respective de la zone prédéterminée (110) au moyen des capteurs (102A - 102G) et transmission sans fil d'un signal de capteur (SIG) correspondant,
c) réception (S3) des signaux de capteur (SIG),
d) identification (S4) d'une position respective des véhicules (200) en fonction des signaux de capteur reçus (SIG), et
e) commande (S5) des véhicules (200) en fonction de la position respective identifiée et d'une carte numérique (112) déterminée de la zone prédéterminée (110).

12. Produit de programme informatique, comprenant des instructions qui, lors de l'exécution du programme par un ordinateur, amènent celui-ci à exécuter les étapes b) à e) du procédé selon la revendication 11.
